# EUROPEAN PATENT APPLICATION

(11) **EP 4 135 297 A1**
(43) Date of publication of application: **15.02.2023**
(21) Application number: 22189791.1
(22) Date of filing: 10.08.2022
(51) Int. Cl.: H04L 67/12, H04L 67/5651

(54) **DYNAMIC AND SECURE PACKET FORMATION FOR TRANSMISSION MANAGEMENT OF IOT DEVICE DATA**

(30) Priority: 11.08.2021 IN 202111036289
(71) Applicant: Carrier Corporation, Palm Beach Gardens, FL 33418 (US)
(72) Inventor: DATTAGURU, BN, 560035 Bangalore (IN); THIRUVENKATAM, Rajesh, 560035 Bangalore (IN); SINGH, Manoranjan, 560035 Bangalore (IN)
(74) Representative: Dehns

(57) **Abstract**

Provided are a method and system (100) for transmission management of Internet of Things (IoT) device data. The method includes receiving polling data from the one or more devices (102) available in the network based at least in part on one or more adaptable device configuration templates (200) stored in a template library (140, 156), and determining a number of active devices available in the network and data provided by the active devices based on the received polling data and the corresponding adaptable device configuration template. The method also includes generating one or more configurable data packets for transmission over a communication channel to an IoT platform (106), identifying variations in device configurations by comparing the one or more adaptable device configuration templates (200) stored in the template library (140, 156) with the received polling data, and modifying the corresponding adaptable device configuration template based on the identified variations.

## Description

This disclosure relates generally to dynamic packet formation and more particularly to dynamic and secure packet formation for transmission management of Internet of Things (IoT) device data.

With the proliferation of IoT networks, more and more devices may be connected for performing various sensing, tracking, monitoring, and controlling of devices. These devices can be used in a variety of different applications in both residential and commercial uses. For example, home uses can include monitoring home appliances or security systems and commercial uses can include industrial applications such as monitoring and controlling equipment in a manufacturing plant. The emergence of IoT networks has served as a catalyst for profound change in the evolution of the Internet due to the vast amounts of data transmitted over the internet.

However, in current approaches either these variations are not taken into consideration and all the data received via polling is sent to the cloud for further processing or not all the variations are comprehensively considered for full efficiency. This results in wastage of cloud resources such as bandwidth, storage, processing time etc. Additionally, current approaches use various methods for identification and registration of these devices and to establish communication between the identified device and the IoT platform. Every time a new site or device is identified, manual intervention is required to provision the site/device onto the platform. Also, onboarding of the site/device necessitates reboot/restart of the platform applications.

Hence there may be a need for a system and method that provides dynamic, secure and efficient packet formation for transmission management of IoT device data while optimizing network and cloud resources to ensure flexibility of dynamically adding/removing a site or devices without interrupting the data flow and communication.

According to a first aspect there is provided a method for performing dynamic and secure packet formation. The method includes receiving polling data from the one or more devices available in a network based at least in part on one or more adaptable device configuration templates stored in a template library, and determining a number of active devices available in the network and data provided by the active devices based on the received polling data and the corresponding adaptable device configuration template. The method also includes generating one or more configurable data packets for transmission over a communication channel to an IoT platform, identifying variations in device configurations by comparing the one or more adaptable device configuration templates stored in the template library with the received polling data, and modifying the corresponding adaptable device configuration template based on the identified variations.

Optionally, the method includes identifying the variations in the device configurations based on identifying at least in part one of a change in data from additions, failures and sensed environment, validity of received data points and number of active devices.

Optionally, the method includes using one or more adaptable device configuration templates that are modified through supervised learning until a match is achieved between the one or more stored adaptable device configuration templates, the number of active devices, and the received polling data. Optionally,
the method includes updating the template library with adaptable device configuration template through supervised learning for subsequent use.

Optionally, the method includes using a device poll frequency that is dynamically determined based at least in part on one or more network conditions between the network, the edge controller, and the IoT Platform.

Optionally, the one or more network conditions is at least one of a bandwidth, a network error rate, a signal strength, a bounce rate, connection failures or cloud resource utilization.

Optionally, the method includes modifying the one or more adaptable device configuration templates based at least in part on the one or more network conditions, available data sufficiency and failure conditions.

Optionally, the method includes modifying an adaptable device configuration template that is used by the system as a current in-use template until pre-determined conditions are met.

According to a second aspect there is provided a system for managing transmission of Internet of Things (IoT) device data. The system comprises: one or more devices in a network; an edge controller coupled to the one or more devices in the network; and an IoT platform coupled to the edge controller over a communication channel. The edge controller is configured to: receive polling data from the one or more devices available in the network based at least in part on one or more adaptable device configuration templates stored in a template library; determine a number of active devices available in the network and data provided by the active devices based on the received polling data and the corresponding adaptable device configuration template; generate one or more configurable data packets for transmission over the communication channel to the IoT platform; identify variations in device configurations by comparing the one or more adaptable device configuration templates stored in the template library with the received polling data; and modify the corresponding adaptable device configuration template based on the identified variations.

The following descriptions should not be considered limiting in any way. With reference to the accompanying drawings, like elements are numbered alike:
FIG. 1 is a system for dynamic and secure packet formation;
FIG. 2 depicts an example adaptable template;
FIG. 3 depicts an example packet; and
FIG. 4 depicts a flowchart of a method for performing dynamic and secure packet formation.

An IoT edge controller can poll heterogeneous/multitude of devices at a preset frequency to get data that is enormous & sometimes overwhelms the network. Other factors like occasional malfunction/communication failure of device, wrong data received, resending previously sampled data, partial data points also affect communication efficiency. These variations if neglected result in wasting the use of cloud resources. In addition, as new devices are provisioned on the platform it may be necessary to manually intervene and reboot the platform application.

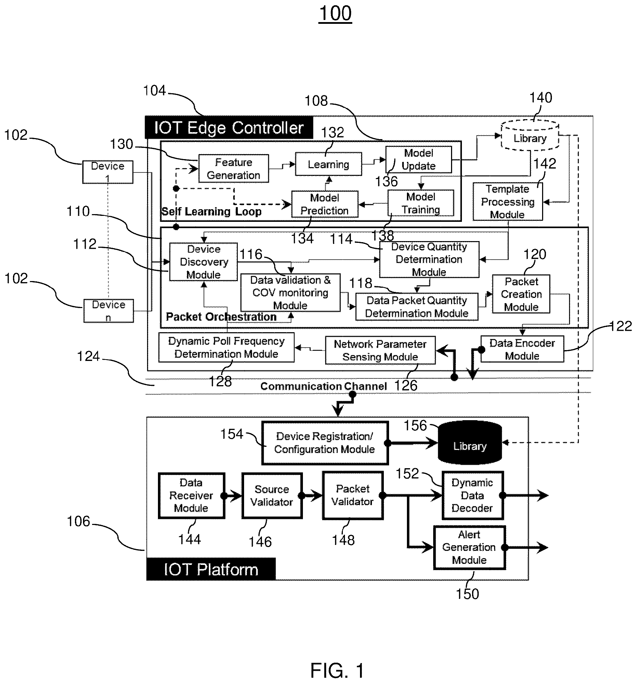

FIG. 1 depicts a system for managing the transmission of IoT device data. The system 100 includes a plurality of devices. The devices may include IoT devices such as thermostats, switches, cameras, motions sensors, and many more. In some instances, IoT devices may also include smartphones, tablets, or other computing devices. The plurality of devices may be accessed from a controller. The controller may be configured to dynamically poll and/or query the devices available in the network to obtain the data from the devices. The system 100 may dynamically adapt the device polling frequency to get an optimized amount of data via polling. The devices are configured according to the configuration templates. It can be appreciated that depending on the technology used, the device configurations may vary.

The templates may define the characteristics and behaviors of a type of connected device. For example, a device template may include the device name, type, model number, etc. The device behavior may include controlling the LEDs of the device, frequency of transmitting alerts, set points to trigger an action or alert, etc.

It should be understood that a variety of devices may be used and the template may be used to obtain the data from the various types of devices. Also, it should be understood that the templates may include different templates such as controller configuration templates, holiday templates, and more.

The system 100 may also include an IoT edge controller 104 and an IoT platform 106. The IoT edge controller 104 may include a variety of components and sections such as the packet orchestration section 110 and a self-learning loop 108. The packet orchestration section 110 is configured to collect real-time data from the connected devices and generate a packet based on a number of considerations to be discussed. The packet orchestration section 110 includes a device discovery module 112 which may receive a response to a poll or query from the controller 104. The device discovery module 112 is operably coupled to a device quantity determination module 114 which is configured with instructions to identify and count the number of connected devices in the network. The device discovery module 112 gathers device configuration information such as device type, device quantity, polling frequency etc., from the template processing module 142. Similarly, device discovery module 112 also gathers optimized polling frequency information from the dynamic poll frequency determination module 128. Dynamic calculation of device quantity for each sampled data set enables further optimization of data packets to be formed. A data validation and COV monitoring module 116 is configured to check the validity of the data points received from the device discovery module 112. The data points may vary owing to various reasons such as devices being non-functional, malfunctioning or sending wrong data set values etc. The data validation and COV monitoring module 116 tags such data points before sending it to the data packet quantity determination module 118. Data points when polled are also validated against logic defined for type of parameter which may have various methods such as range, persistency, invalid values, etc. Missing values can be simulated by computing line fitting, curve fitting and other methods based on type of parameter and its behavior. Behavior can be linear, logarithmic or quadratic which is defined based on the parameter type. The data packet quantity determination module 118 is configured to determine the format of the packet to be communicated to the IoT platform 106 based on the device quantity determination, dynamic poll frequency and the validity of the data. This enables the packet to only include data for those devices that remain connected to the network and remove data from those devices that are no longer connected. The packet creation module 120 dynamically generates the packet that is formatted based on the data indicating the latest connected devices. Packet creation module 120 intelligently decides whether the sampled data need to be included in the data packets and alters the data packet size to optimize bandwidth usage for available network type (e.g., 3G, LTE, 4G) etc. Packet creation module 120 may dynamically reduce the packet size for transmission owing to network congestion. The data encoder module 122 encodes the formatted packet and transmits the packet to the channel 124. The data encoder module 122 uses a unique 7E method for encoding-decoding of the packets. The 7E encoding-decoding method is described in U.S. Patent No. 9,952,575 to Nanjundaiah et al., entitled, "Energy Management Systems and Methods." The data encoder is also configured to communicate with a plurality of IoT Platform servers and may send data packets using different and unique encoding/encryption schemes for each server.

The edge controller 104 also includes a network parameter sensing module 124 which can detect various conditions of the network, communication system 124, and/or IoT platform 106. For example, the condition information may include parameters such as network utilization, network error rate, cloud resource utilization, etc. The dynamic poll frequency determination module 128 receives the current sensed parameters from the network parameter sensing module 126 to determine the frequency the devices 102 should be polled. Parameter sensing module 126 is configured to sense various communication network (between IOT controller and IOT Platform) parameters such as bandwidth, network error rate, Signal strength, bounce rate, connection failures and IOT Platform cloud resource utilization parameters such as server load, concurrent connections and the like. Dynamic poll frequency determination module 128 determines the optimal polling frequency for the devices in network based on communication network state and cloud computing resource utilization as received from parameter sensing module 126. In a non-limiting example, when the sensed network parameters indicate low available bandwidth or high network resource utilization, the polling frequency can be reduced. Alternatively, if the sensed network parameters indicate high available bandwidth or low network resource utilization, the polling frequency can be increased. It should be understood different network parameters can be obtained and used to modify the polling frequency.

FIG. 1 also depicts, the self-learning loop 108 and is adapted to optimize the values for the templates used for communicating with the IoT platform 106 and the connected devices 102. The self-learning loop 108 may include a feature generation module 130 which extracts data from the received communication from the devices 102. The learning module obtains 132 uses the features from the model prediction module 134 and the feature generation module 130 to iteratively process the values to update the template. The adaptable device configuration template is modified through supervised learning until a desired match is achieved between the existing adaptable device configuration template, the number of active devices, and the polling data. The adaptable device configuration template is also modified based at least in part on the network conditions, available data sufficiency and failure conditions. The adaptable device configuration template may be modified based on data sufficiency analytics in relation to connectivity and data quality as available from third party systems or as described in pending U.S. Patent Application Publication No. 2020/11019451, entitled, "A System and a Method for Generating Service Actionable for Equipment."

As discussed, the templates may include information related to characteristics and behavior of the different devices 102. The self-learning loop 108 also includes a model update module 136 which transmits the updated model for the template to the library 140 for storage. The modified adaptable device configuration template is used by the system as a current in-use template until desired all good conditions are met. On meeting the desired all good conditions, the modified adaptable device configuration template is updated in the library 140 for subsequent use as the most optimum device configuration template. The library 140 may be located locally at the IoT edge controller that is synchronized (at regular interval) with the library 156 available in the IoT Platform. The template processing module 142 module may directly connect with the library 156 available remotely in the IoT Platform. Templates are divided into separate types based on types of protocol technologies used, read only templates, control program templates, etc. which helps configuring the features and functionalities on need basis. The model training module 138 is configured to extract the template from the library 140 and provide the template to the model prediction module 134 for further processing and prediction to optimize the values for the template. The templates are updated based on the responses to the device polling and queries to maintain the most-up-to-date values for the templates. The updated templates are subsequently used for packet generation.

FIG. 1 also includes the IoT platform 106 includes a data receiver module 144 and is configured to receive data from the communication channel 124. The source validator 146 and packet validator 148 can verify the source of the received packet. In the event the packet validator 148 detects an invalid value or a value that is abnormal or outside of a normal range according to set thresholds, a signal may be sent to the alert generation module 150. Alternatively, the packet may be sent to the dynamic data decoder 152 for further processing by the IoT platform 106. The packet validator 148 and data decoder 152 adapt itself to include template library or provisioning changes without any module reboot. Depending on the dynamic encoded data packet frame, data decoder 152 decodes the exact parameter included in the data packet frame using a unique method by reading the packet and filling the non-filled values with respect to provisioning with the previous/required values.

The IoT platform 106 also includes a device registration/configuration module 154 to manage the devices 102 connected in the system 100. In addition, the device registration/configuration module 154 provides data to the library 156. The library is adapted to store the plurality of templates. It should be understood the adaptable templates of the library 156 of the IoT platform 154 can be updated from the library 140 at the edge controller 104.

The techniques described herein modifies the adaptable templates using the supervised machine learning until a desired match is achieved between the configured template and the actual devices, and the parameters that are obtained from the responses to the device queries and/or polls.

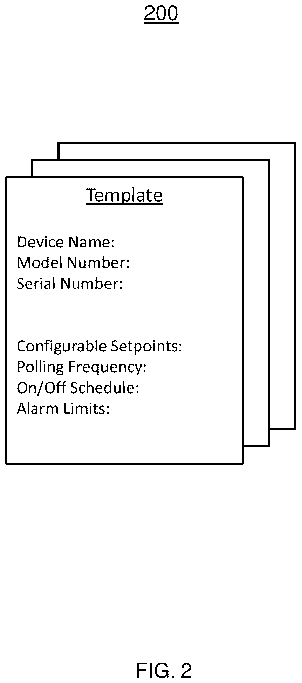

FIG. 2 depicts an example adaptable template 200 that may be used and updated. The adaptable device configuration template available in the template library corresponding to a particular device acts as an initial expected configuration template for the data packet. The system learns and identifies variations in the initial adaptable device configuration template and the data flow from actual devices and sensors to determine whether the variations are permanent or dynamic in nature. Permanent changes identified are converted to configuration changes resulting in a new adaptable device configuration template which is then updated in the template library (e.g., changes in parameters like polling interval based on device count, data frequency based on data type, polling frequency based on network parameters, etc.). Dynamic changes identified (e.g., changes resulting from a sensor failure giving bad data are applicable for a short period of time i.e., until the sensor or device gets rectified) are used temporarily as a current in-use template until desired all good conditions are met. The current in-use template is used to communicate to the central cloud. The adaptable device configuration templates learn from multiple devices and may also use learning from other sources like network conditions, available data sufficiency analytics and failure conditions. Data sufficiency analytics in relation to connectivity and data quality may be available from third party systems. The latest released version of the template is used as applicable for new sites. The values for the template may be updated based on the devices that latest polled data and the current network conditions.

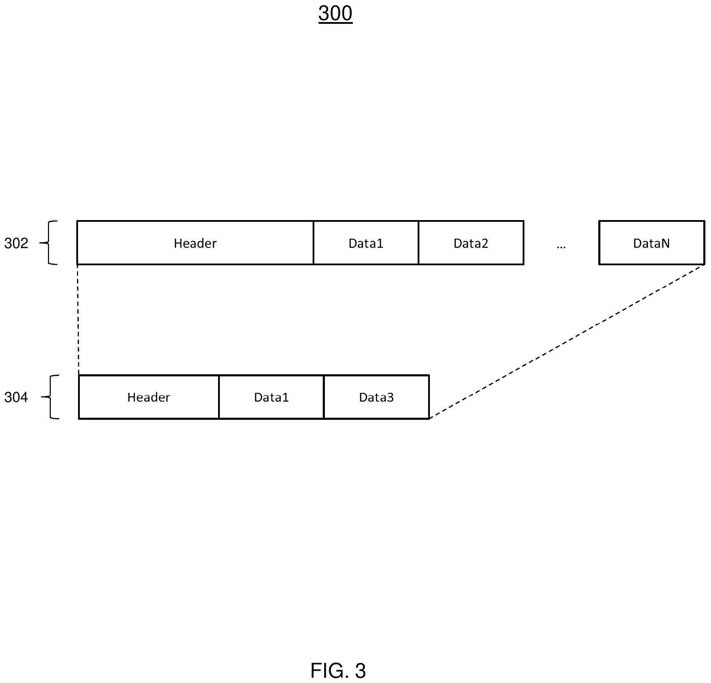

FIG. 3 depicts an example packet is generated using the adaptable template. The conventional packet 302 includes a header and payload data for all of the previously connected device1, device2, ... deviceN which may correspond to "Data1" "Data2" . "DataN," respectively. In the event that an update has occurred in the system 100, where a device 102 is added or removed, the update in the packet generation is not accounted for in the packet format until the IoT platform 106, library 156, and IoT edge controller 104, library 140 are synchronized.

The packet 304 includes a header and "Data1" and "Data3" corresponding to device1 and device3. In this non limiting example, the device2 has been removed from the network and the updated packet 304 reflects the change. There is no need to update IoT platform 106 with the data associated with the device2. The packet 304 is only for illustrative purposes and it should be understood that any number of devices 102 may be added or removed from the packet for communicating with the IoT platform 106.

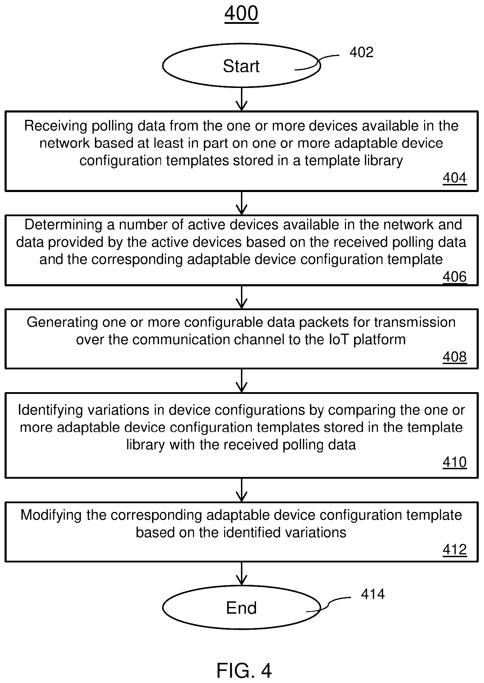

FIG. 4 depicts a method 400 for managing transmission of IoT device data. The method 400 may be performed by one or more components in the system 100 shown in FIG. 1. The method 400 begins at block 402 and proceeds to block 404 which provides for receiving, at an edge controller, polling data from the one or more devices available in the network based at least in part on one or more adaptable device configuration templates stored in a template library. Block 406 determines a number of active devices available in the network and data provided by the active devices based on the received polling data and the corresponding adaptable device configuration template. Block 408 generates one or more configurable data packets for transmission over the communication channel to the IoT platform. Block 410 identifies variations in device configurations by comparing the one or more adaptable device configuration templates stored in the template library with the received polling data. Block 412 modifying the corresponding adaptable device configuration template based on the identified variations. The method 400 ends at block 414. It can be appreciated that a different sequence of steps or alternative steps can be implemented.

The technical effects and benefits include dynamic packet formation based on poll frequency, device quantity and data points. In addition, there is no need to perform a complete reboot of the system but instead the application can be restarted. The technical effects and benefits include supporting a multitude of edge devices, utilizing standardized reusable template-based configurations, compressing data and encoding the data in a specific format to optimize network bandwidth and resource utilization. The packet format avoids the unnecessary transmission of data for devices that may no longer be connected to the system.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as set out in the appended claims. In addition, many modifications may be made to adapt a particular situation or material to the teachings of the present invention as set out in the appended claims without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A method of transmission management of Internet of Things (IoT) device data, the method comprising:
receiving, at an edge controller (104), polling data from the one or more devices available in a network based at least in part on one or more adaptable device configuration templates (200) stored in a template library (140, 156);
determining a number of active devices (102) available in the network and data provided by the active devices based on the received polling data and the corresponding adaptable device configuration template;
generating one or more configurable data packets for transmission over a communication channel (124) to an IoT platform (106);
identifying variations in device configurations by comparing the one or more adaptable device configuration templates (200) stored in the template library (140, 156) with the received polling data; and
modifying the corresponding adaptable device configuration template (200) based on the identified variations.

2. The method of claim 1, wherein the identified variations in the device configurations are identified based at least in part on one of a change in data from additions, failures and sensed environment, validity of received data points and number of active devices (102).

3. The method of claim 1 or 2, wherein the one or more adaptable device configuration templates (200) are modified through supervised learning until a match is achieved between the one or more stored adaptable device configuration templates, the number of active devices (102), and the received polling data,
optionally further comprising updating the template library (140, 156) with adaptable device configuration template match achieved through supervised learning for subsequent use.

4. The method of any preceding claim, wherein a device poll frequency is dynamically determined based at least in part on one or more network conditions between the network, the edge controller (104), and the IoT Platform (106).

5. The method of any preceding claim, wherein the one or more network conditions comprises at least one of a bandwidth, a network error rate, a signal strength, a bounce rate, connection failures or cloud resource utilization.

6. The method of claim 5, further comprising modifying the one or more adaptable device configuration templates (200) based at least in part on the one or more network conditions, available data sufficiency and failure conditions.

7. The method of any preceding claim, wherein the modified adaptable device configuration template (200) is used by the system as a current in-use template until pre-determined conditions are met.

8. A system (100) for managing transmission of Internet of Things (IoT) device data comprising:
one or more devices (102) in a network;
an edge controller (104) coupled to the one or more devices (102) in the network; and
an IoT platform (106) coupled to the edge controller (104) over a communication channel (124),
wherein the edge controller (104) is configured to:
receive polling data from the one or more devices (102) available in the network based at least in part on one or more adaptable device configuration templates (200) stored in a template library (140, 156);
determine a number of active devices (102) available in the network and data provided by the active devices based on the received polling data and the corresponding adaptable device configuration template;
generate one or more configurable data packets for transmission over the communication channel to the IoT platform (106);
identify variations in device configurations by comparing the one or more adaptable device configuration templates (200) stored in the template library (140, 156) with the received polling data; and
modify the corresponding adaptable device configuration template (200) based on the identified variations.

9. The system (100) of claim 8, wherein the identified variations in the device configurations are identified based on at least in part on one of a change in data from additions, failures and sensed environment, validity of received data points and number of active devices (102).

10. The system (100) of claim 8 or 9, wherein the one or more adaptable device configuration templates (200) are modified through supervised learning until a match is achieved between the one or more stored adaptable device configuration templates, the number of active devices (102), and the received polling data.

11. The system (100) of claim 10, further comprising updating the template library (140, 156) with adaptable device configuration template match achieved through supervised learning for subsequent use.

12. The system (100) of any of claims 8-11, wherein the device poll frequency is dynamically determined based at least in part on one or more network conditions between the network, the edge controller (104), and the IoT Platform (106).

13. The system (100) of any of claims 8-12, wherein the one or more network conditions comprises at least one of a bandwidth, a network error rate, a signal strength, a bounce rate, connection failures or cloud resource utilization.

14. The system (100) of claim 13, further comprising modifying the one or more adaptable device configuration templates (200) based at least in part on the one or more network conditions, available data sufficiency and failure conditions.

15. The system (100) of any of claims 8-14, wherein the modified adaptable device configuration template (200) is used by the system as a current in-use template until pre-determined conditions are met.
